# FASCICULE DE BREVET EUROPEEN

(11) **EP 1 944 848 B1**
(45) Date de publication et mention de la délivrance du brevet: **03.04.2019**
(21) Numéro de dépôt: 08290023.4
(22) Date de dépôt: 11.01.2008
(51) Int. Cl.: H02G 13/00

(54) **Dispositif et procédé de mesure de courant de foudre**
Vorrichtung und Verfahren zur Messung der elektrischen Ladung eines Blitzes
Device and method of measuring lightning currents

(30) Priorité: 12.01.2007 FR 0700230
(43) Date de publication de la demande: 16.07.2008
(73) Titulaire: ABB Schweiz AG, 5400 Baden (CH)
(72) Inventeur: Lafon, Guy, 65200 Bagneres-de-Bigorre (FR); Serrie, Gérard, 6530 Lansac (FR); Mennesson, Christian, 60500 Chantilly (FR)
(74) Mandataire: Hirsch & Associés

(56) Documents cités:
- EP-A1- 0 656 635
- EP-A1- 0 762 589
- DE-U1- 9 400 656
- FR-A1- 2 848 008
- US-A- 2 502 657

## Description

La présente invention concerne les dispositifs de protection d'édifices contre la foudre, et plus précisément contre les effets d'un impact direct de foudre.

Plus particulièrement, la présente invention concerne un dispositif de protection d'un édifice contre la foudre, ledit dispositif comprenant :
- au moins un moyen de capture de foudre conçu pour recevoir une décharge directe de foudre,
- au moins un conducteur d'écoulement conçu pour écouler, depuis ledit moyen de capture vers la terre, le courant électrique, dit « *courant de foudre* », qui résulte de ladite décharge de foudre.

La présente invention concerne également un procédé de mesure d'un courant de foudre dans une installation comprenant au moins un moyen de capture de foudre conçu pour recevoir une décharge directe de foudre, ainsi qu'au moins un conducteur d'écoulement conçu pour écouler, depuis ledit moyen de capture vers la terre, le courant électrique dit « *courant de foudre* » qui résulte de ladite décharge de foudre.

Il est connu de doter différents types d'édifices, tels que des bâtiments à usage commercial, industriel ou d'habitation, des monuments, ou encore des ouvrages de génie civil du genre infrastructures de transport de biens, de personnes ou d'énergie, de dispositifs de protection contre la foudre visant à capter les décharges électriques aériennes qui se produisent lors des orages, de manière à écouler celles-ci vers la terre, et ainsi préserver des effets du foudroiement l'édifice et ses éventuels équipements ou occupants. Les dispositifs de protection contre les impacts directs de foudre comprennent généralement un ou plusieurs éléments conducteurs constituant des moyens de capture, tel qu'une pointe de paratonnerre ou une cage maillée, reliés à un conducteur de descente apte à acheminer le courant électrique provoqué par un impact de foudre, dit « *courant de foudre* », depuis lesdits moyens de capture jusqu'à une prise de terre, usuellement constituée par des barrettes métalliques enterrées disposées en patte d'oie.

Bien que les dispositifs de protection contre la foudre de l'art antérieur soient en règle générale dimensionnés pour pouvoir supporter un, voire plusieurs impacts directs de foudre, il est nécessaire de s'assurer après chaque impact que le dispositif n'a pas été dégradé et continue à offrir une protection satisfaisante de l'édifice.

A cet effet, il est connu de comptabiliser le nombre d'impacts de foudre subis par le dispositif et de mesurer l'intensité du ou des courants de foudre correspondants.

En particulier, il est connu de tronçonner un conducteur de descente pour pouvoir enfiler autour de celui-ci un capteur inductif toroïdal, puis de rétablir la continuité du conducteur de descente par une jonction mécanique conductrice de type vis-écrou ou encore soudure. Ainsi, il est possible de détecter par induction l'apparition d'un courant de foudre et d'en mesurer les caractéristiques (amplitude, forme d'onde).

Il est également connu d'associer en série avec le conducteur de descente un capteur formé par un composant de charge de type résistance de manière à pouvoir relever la tension aux bornes dudit composant de charge lorsque le courant de foudre circule à travers le circuit ainsi formé. Généralement, on sectionne à cet effet le conducteur de descente de manière à pratiquer l'ablation d'un tronçon de ce dernier, auquel on substitue ensuite une résistance de charge que l'on raccorde électriquement au reste du conducteur de descente, par exemple par soudage.

De tels capteurs, bien qu'ils permettent généralement d'évaluer assez précisément les caractéristiques dudit courant de foudre lorsqu'ils sont associés à un moyen d'évaluation du courant de foudre comprenant un moyen de mesure de tension de type voltmètre, présentent toutefois des inconvénients non négligeables.

En premier lieu, la mise en place desdits capteurs implique une découpe préalable suivie d'une reconstitution mécanique et électrique du conducteur de descente, ce qui suppose la réalisation d'une ou de plusieurs jonctions particulièrement robustes, aptes à supporter les effets tant électriques, que thermiques et mécaniques de l'écoulement d'un courant de foudre. La réalisation de telles jonctions requiert du temps et de la minutie, ce qui contribue à augmenter le coût de l'installation.

Ensuite, malgré le soin apporté à la réalisation de telles jonctions, ces dernières constituent des points de fragilisation du conducteur de descente susceptibles d'être rapidement endommagés voire de se rompre, sous l'effet des courants de foudre, et ainsi de dégrader, voire d'anéantir, la capacité de protection du dispositif.

Par ailleurs, le capteur, en particulier lorsqu'il s'agit d'un composant de charge placé en série avec le conducteur de descente, doit lui-même être suffisamment dimensionné pour résister au passage, de préférence répété, du courant de foudre. De fait, le coût d'un tel capteur est généralement élevé.

Ainsi, la mise en place de capteurs connus peut non seulement s'avérer particulièrement onéreuse mais encore être à l'origine de la formation de points faibles susceptibles d'occasionner une défaillance indétectable du dispositif de protection contre la foudre.

En outre, l'adjonction d'un composant de charge résistif intercalé entre le moyen de capture et la terre constitue un frein à l'écoulement du courant de foudre, c'est-à-dire contribue à dégrader la capacité nominale d'écoulement, ou « pouvoir de décharge », du dispositif de protection.

Il résulte de ce qui précède que les dispositifs de protection contre la foudre de l'art antérieur peuvent, dans certaines circonstances, s'avérer à la fois coûteux à installer et insuffisamment fiables.

Par ailleurs, il est connu du document FR-A-2 848 008 un dispositif autonome de surveillance d'événement dans un conducteur électrique et un document US 2502657, une forme de construction dans laquelle le courant de pointe développé dans le conducteur de masse du paratonnerre peut être mesuré. Les objets assignés à l'invention visent par conséquent à remédier aux inconvénients susmentionnés et à proposer un nouveau dispositif de protection d'un édifice contre la foudre qui soit particulièrement simple et fiable tout en offrant une qualité de protection, et notamment une capacité d'écoulement des courants de foudre, optimisée.

Un autre objet assigné à la présente invention vise à proposer un nouveau dispositif de protection contre la foudre qui possède une structure compacte et robuste.

Un autre objet assigné à la présente invention vise à proposer un nouveau dispositif de protection contre la foudre dont l'installation et la mise en oeuvre soient particulièrement faciles, y compris au sein d'installations de protection préexistantes.

La présente invention vise également à proposer un nouveau dispositif de protection contre la foudre qui présente un pouvoir de capture de la foudre élevé.

Les objets assignés à la présente invention visent également à proposer un nouveau dispositif de protection contre la foudre qui soit sensiblement autonome.

La présente invention vise également à proposer un nouveau dispositif de protection contre la foudre dont la longévité soit accrue et la maintenance simplifiée.

Les objets assignés à l'invention visent enfin à proposer un nouveau procédé de mesure d'un courant de foudre qui soit particulièrement simple et peu onéreux à mettre en oeuvre, tout en ne perturbant pas le fonctionnement normal du dispositif de protection contre la foudre.

Les objets assignés à l'invention sont atteints à l'aide d'un dispositif de protection d'un édifice contre la foudre selon la revendication 1.

Les objets assignés à l'invention sont également atteints à l'aide d'un procédé de mesure d'un courant de foudre selon la revendication 18.

D'autres objets, caractéristiques et avantages de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue en perspective schématique, l'implantation d'un dispositif de protection contre la foudre conforme à l'invention sur un édifice à protéger.
- La figure 2 présente un schéma électrique partiel correspondant à une variante de réalisation d'un dispositif de protection contre la foudre conforme à l'invention.
- La figure 3 illustre, selon une vue schématique avec coupe partielle, une variante de réalisation d'un dispositif de protection contre la foudre conforme à l'invention.

La présente invention concerne un dispositif de protection 1 d'un édifice 2 contre la foudre.

Par « *édifice* » 2, on désigne indifféremment des bâtiments à usage industriel, commercial ou d'habitation, des monuments, des ouvrages de génie civil ou militaires tels que des ponts, ou encore des infrastructures de transport de biens, de personnes ou d'énergie.

Le dispositif de protection 1 conforme à l'invention a pour but de capter une éventuelle décharge électrique aérienne provenant d'un nuage d'orage chargé et d'acheminer celle-ci vers la terre le plus directement possible, afin de dissiper l'énergie de l'impact de foudroiement. Ainsi, le dispositif de protection 1 est à même de préserver l'intégrité de l'édifice 2 et/ou des occupants et équipements situés dans ou à proximité immédiate dudit édifice 2.

A cet effet, le dispositif 1 comprend au moins un moyen de capture de foudre 3 conçu pour recevoir une décharge directe de foudre, ainsi qu'au moins un conducteur d'écoulement 4 conçu pour écouler, depuis ledit moyen de capture 3 vers la terre, le courant électrique, dit « *courant de foudre* », qui résulte de ladite décharge de foudre.

Il est remarquable que la présente invention n'est nullement limitée à un moyen de capture 3 particulier, lequel peut notamment consister en un réseau de conducteurs de type cage maillée, une pointe de paratonnerre, ou tout autre système équivalent.

Par commodité de description, on considérera cependant dans la suite du texte que le dispositif 1 conforme à l'invention constitue un paratonnerre dont le moyen de capture 3 est constitué par une pointe 5 et dont le conducteur d'écoulement 4 forme un mât 6 qui soutient ladite pointe 5.

Bien entendu, différents types de structures porteuses autre qu'un mât 6 peuvent être envisagés, pourvu que lesdites structures porteuses placent le moyen de capture 3 dans une situation spatiale adéquate, et notamment à une altitude suffisamment élevée, pour que le dispositif 1 remplisse sa fonction de protection vis-à-vis de l'édifice 2.

Par ailleurs, si la base du mât 6 ne repose pas directement sur le sol, le conducteur d'écoulement 4 peut également comprendre un conducteur de descente 4D, tel qu'un câble fixé à la surface de l'édifice 2, qui relie le mât 6 à une prise de terre, cette dernière pouvant par exemple être réalisée à l'aide d'éléments conducteurs enterrés disposés en « *patte d'oie* ».

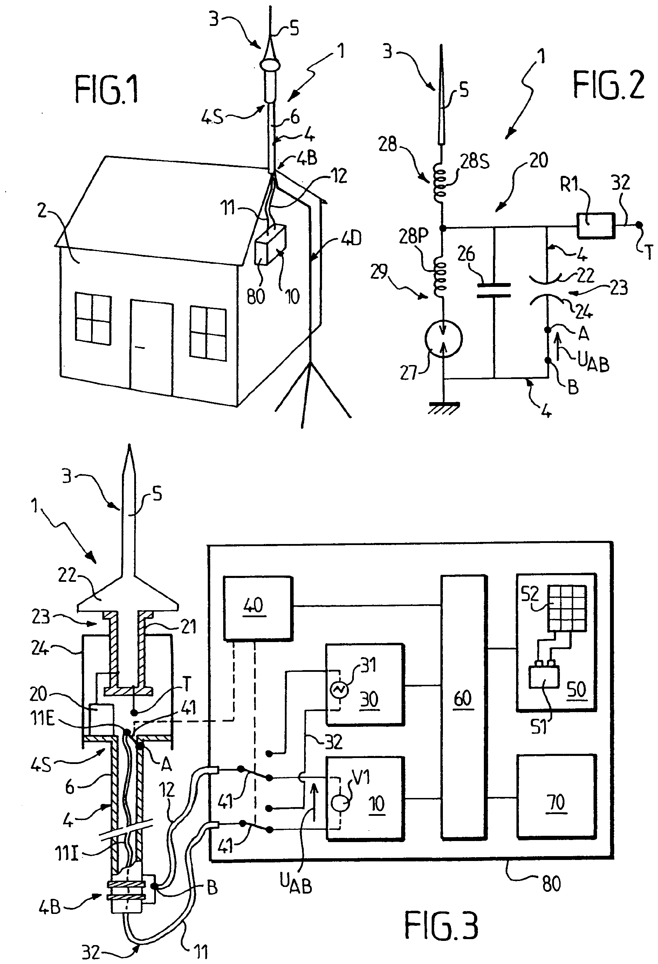

Bien qu'il puisse être orienté selon une direction oblique, le mât 6 pointe de préférence sensiblement à la verticale à partir du sommet de l'édifice 2, tel que cela est représenté sur la figure 1.

Selon une caractéristique importante de l'invention, le conducteur d'écoulement 4 est dépourvu de composant de charge susceptible de perturber significativement l'écoulement du courant de foudre, et le dispositif de protection 1 comporte un moyen d'évaluation dudit courant de foudre 10 (ci-après « *moyen d'évaluation 10* ») qui est raccordé électriquement audit conducteur d'écoulement 4, de sorte à pouvoir mesurer la tension U_{AB} qui apparaît entre les bornes A, B d'un tronçon [AB] (ci-après « *tronçon d'épreuve* ») dudit conducteur d'écoulement 4, lorsque ce dernier est parcouru par ledit courant de foudre.

De façon préférentielle, le moyen d'évaluation 10 comporte à cet effet un instrument de mesure de tension, par exemple un voltmètre V1 ou un montage électronique suiveur de tension, de manière à pouvoir relever la tension U_{AB}. En variante, ledit moyen de mesure de tension peut être relié au secondaire d'un transformateur d'isolement dont le primaire est raccordé aux bornes A, B du tronçon d'épreuve [AB] du conducteur d'écoulement 4.

En d'autres termes, c'est une portion du conducteur d'écoulement 4 lui-même, en l'occurrence le tronçon d'épreuve [AB], qui forme un capteur apte à convertir, du fait de son impédance intrinsèque, et plus particulièrement, de sa résistance électrique, le courant de foudre qui traverse ledit conducteur d'écoulement 4 en un signal de tension image dudit courant de foudre (selon la loi d'Ohm), ledit signal image étant alors exploité, et notamment recueilli et analysé, par le moyen d'évaluation du courant de foudre 10, sans qu'il soit nécessaire de recourir à un capteur annexe, et notamment à une résistance de charge additionnelle rapportée en série sur le circuit emprunté par courant de foudre depuis le moyen de capture 3 pour rejoindre la terre.

Plus précisément, en choisissant sur le conducteur d'écoulement 4 deux points de branchement séparés par une distance suffisante (considérée par rapport à la direction de l'écoulement du courant de foudre dans ledit conducteur d'écoulement), on peut mesurer la différence de potentiel, ou « *chute de tension* », qui apparaît naturellement entre ces deux points distants lorsque ledit conducteur d'écoulement 4 est parcouru par un courant électrique, du simple fait que ce dernier possède une impédance propre, et notamment une résistivité non nulle.

De façon particulièrement avantageuse, au sein du dispositif conforme à l'invention, la conversion du courant de foudre en signal de tension image s'opère sans occasionner la moindre gêne ni constituer le moindre obstacle au libre écoulement du courant de foudre par rapport à ce que serait ledit écoulement dans un dispositif de protection contre la foudre analogue comportant le même conducteur d'écoulement 4 exempt notamment de résistance de charge, mais qui serait dépourvu de tout moyen d'évaluation du courant de foudre. En d'autres termes, la mise en oeuvre du moyen d'évaluation du courant de foudre 10 n'interfère pas avec le fonctionnement normal du dispositif 1 conforme à l'invention, et en particulier ne dégrade pas le pouvoir de décharge dudit dispositif.

A partir du signal de tension U_{AB} qui restitue une image fidèle du courant de foudre, le dispositif 1, et plus particulièrement le moyen d'évaluation 10, est apte à déduire les caractéristiques dudit courant de foudre, telles que l'amplitude et la forme d'onde.

A ce titre, il est remarquable que la forte intensité du courant de foudre permet, conformément à la loi d'Ohm, d'obtenir une tension U_{AB} relativement élevée, même pour de faible valeurs de résistance R_{AB} du tronçon d'épreuve [AB], ladite tension U_{AB} étant par conséquent aisément détectable et précisément exploitable.

De façon particulièrement avantageuse, la mise en oeuvre du dispositif conforme à l'invention ne nécessite qu'un simple branchement électrique direct par contact, par exemple par abord externe, du moyen d'évaluation 10 sur le conducteur d'écoulement 4, si bien qu'il n'est nullement nécessaire d'interrompre ledit conducteur d'écoulement 4 pour y insérer un capteur inductif ou encore un composant de charge de type résistance. Ainsi, on préserve le conducteur d'écoulement 4 de toute modification structurelle importante consistant à le tronçonner et/ou à le rabouter avec un composant de charge de nature à perturber ou entraver le libre écoulement du courant de foudre.

Les opérations de fabrication et d'installation du dispositif 1 se voient par conséquent considérablement simplifiées tandis que la robustesse, la fiabilité et la longévité dudit dispositif de protection 1 se trouvent renforcées.

En particulier, il est remarquable que le dispositif de protection 1 conforme à l'invention peut être réalisé par rattrapage d'une installation préexistante de type paratonnerre, en adjoignant audit paratonnerre un moyen d'évaluation du courant de foudre 10 tout en conservant globalement intact le conducteur d'écoulement 4 présent, et notamment sans qu'il soit nécessaire de tronçonner ledit conducteur d'écoulement 4 déjà en place (mât ou conducteur de descente).

Bien qu'il soit envisageable de réaliser le conducteur d'écoulement 4 à l'aide de plusieurs éléments conducteurs raccordés dans le prolongement les uns des autres, voire à l'aide de matériaux différents, le conducteur d'écoulement 4 est de préférence monobloc, au moins entre les bornes A, B du tronçon d'épreuve auxquelles est raccordé le moyen d'évaluation du courant de foudre 10.

De préférence, le conducteur d'écoulement 4 présente une continuité globale de sa structure aux points correspondants aux bornes A, B, (éléments destinés au raccordement électrique du moyen d'évaluation 10 mis à part), de telle sorte que les transitions entre le tronçon d'épreuve [AB] et le reste du conducteur d'écoulement 4 restent virtuelles en ce sens que les propriétés électriques, notamment la résistivité, dudit conducteur d'écoulement 4 ne sont pas sensiblement affectées lors du franchissement de l'une des bornes A, B, c'est-à-dire selon que l'on considère ces propriétés dans une zone située dans le tronçon d'épreuve [AB] ou bien dans une zone située dans une portion de conducteur d'écoulement 4 située au voisinage immédiat du tronçon d'épreuve [AB] et hors dudit tronçon d'épreuve [AB].

De façon particulièrement préférentielle, ledit conducteur d'écoulement 4 est sensiblement homogène, continu, et notamment ne présente ni épissure, ni point de soudure comblant une interruption de sa section. En outre, ledit conducteur d'écoulement 4 présente préférentiellement une géométrie régulière et une section sensiblement constante.

Bien entendu, la résistance du tronçon d'épreuve [AB] dépend de la résistivité du matériau employé pour former le conducteur d'écoulement 4, ainsi que de la longueur dudit tronçon et de la forme et des dimensions dudit conducteur d'écoulement 4 entre lesdites bornes A, B.

A titre d'exemple, un mât 6 cylindrique usuel en acier inoxydable d'une hauteur de 2,50 mètres présente une résistance de l'ordre de 10 mΩ.

De façon préférentielle, compte-tenu de l'intensité des courants de foudre usuelles, le tronçon d'épreuve [AB] du conducteur d'écoulement 4 est agencé de telle sorte que sa résistance électrique R_{AB} est inférieure ou égale à 65 mΩ (milliohms).

En outre, la résistance électrique du tronçon d'épreuve est de préférence supérieure ou égale à 4 mΩ (milliohms).

En effet, la valeur minimale de résistance susmentionnée, soit 4 mΩ, correspond à celle d'un tronçon de mât standard de base d'une longueur de 1 m, c'est-à-dire à une portion de mât 6 qui est systématiquement présente sur les installations usuelles de type paratonnerre et définit la longueur minimale dudit mât, tandis que la valeur maximale de résistance, soit 65 mΩ, correspond à la longueur maximale usuelle des mâts standard, c'est-à-dire 6,50 m, laquelle est obtenue en adaptant des éléments de rallonge standard sur ledit tronçon de base de 1 m.

Tel que cela est illustré sur la figure 1, le conducteur d'écoulement 4 s'étend de préférence sensiblement verticalement et présente, dans sa partie supérieure 4S, et, de façon particulièrement préférentielle, sensiblement à son sommet, une première borne de mesure A, dite « *borne de mesure haute* », qui est destinée à être reliée électriquement au moyen d'évaluation du courant de foudre 10 à l'aide d'un premier conducteur de mesure 11, tel qu'un fil.

Selon une variante de réalisation particulièrement préférentielle illustrée sur la figure 3, le conducteur d'écoulement 4 est creux, et le premier conducteur de mesure 11 présente une section isolée 11l qui court à l'intérieur dudit conducteur d'écoulement.

Un tel agencement optimise notamment l'encombrement du dispositif ainsi que sa tenue aux intempéries, le premier conducteur de mesure 11 se trouvant logé à l'abri dans le mât 6.

De préférence, ledit premier conducteur de mesure 11 est agencé pour être accessible à une altitude inférieure à celle de la borne de mesure haute A, et de préférence débouche à cet effet sensiblement à la base de conducteur d'écoulement 4, et plus précisément émerge par l'extrémité inférieure du mât 6. Bien entendu, le premier conducteur de mesure 11 peut parfaitement émerger latéralement hors du mât 6 en tout point, par exemple par une fenêtre percée dans la paroi dudit mât.

En outre, le conducteur d'écoulement 4 présente de préférence, dans sa partie inférieure 4B, et, de façon particulièrement préférentielle sensiblement à sa base, une seconde borne de mesure B, dite « *borne de mesure basse* », qui est destinée à être reliée électriquement au moyen d'évaluation du courant de foudre 10 au moyen d'un second conducteur de mesure 12, tel qu'un fil.

Ainsi, en utilisant un mât 6 présentant une structure tubulaire, donc légère, il est avantageusement possible de loger la borne haute A à l'intérieur dudit mât 6, de préférence dans la moitié supérieure voire au sommet de ce dernier, tandis que la borne de mesure basse B est située sensiblement à la base dudit mât, ce qui permet par conséquent d'exploiter la quasi totalité de la longueur du mât 6 pour former le tronçon d'épreuve [AB] résistif utilisé pour convertir le courant de foudre en une tension image de ce dernier.

Il est toutefois remarquable que la position, et plus précisément l'altitude de chaque borne de mesure A, B peut a priori être choisie librement, dès lors que la disposition relative desdites bornes de mesure définit un tronçon d'épreuve [AB] exploitable.

Bien entendu, il est envisageable d'utiliser en tant que premier conducteur de mesure 11 un fil, un câble, une tresse conductrice, ou encore une tige métallique, pourvu que la section isolée soit convenablement agencée et notamment suffisamment étendue pour empêcher ledit premier conducteur de mesure 11 d'entrer accidentellement au contact du mât 6, et plus précisément avec la surface conductrice interne de ce dernier, ailleurs que sur la borne de mesure haute A prévue à cet effet. En effet, un court-circuit inopiné serait de nature à fausser la mesure de tension effectuée par le moyen d'évaluation 10 en modifiant la longueur du tronçon d'épreuve [AB], donc la valeur de son impédance.

Par ailleurs, la connexion et la fixation du premier et du second conducteur de mesure 11, 12 à leurs bornes de mesure respectives A, B peuvent être réalisé par exemple à l'aide de moyens de bridage mécaniques, internes ou externes au mât 6, tels que des colliers de serrage, des boulons, ou encore des points de soudure.

Selon une variante de réalisation particulièrement préférentielle, le dispositif 1 comprend un moyen d'activation 20 conçu pour augmenter, en valeur absolue, le potentiel électrique du moyen de capture 3.

Plus précisément, tel que cela est représenté sur les figures 2 et 3, le dispositif 1 peut constituer un paratonnerre à dispositif d'amorçage (PDA) dont la pointe est séparée et isolée électriquement, par exemple à l'aide d'un support en matériau isolant 21, du conducteur d'écoulement 4.

En particulier, la base de la pointe 5 peut former une collerette 22 qui constitue la première électrode d'un éclateur 23, la seconde électrode dudit éclateur 23 étant formée par un boîtier conducteur 24 de type cloche qui abrite le moyen d'activation 20.

De façon bien connue, le moyen d'activation 20 peut comporter un circuit électronique 29 destiné à exciter la pointe 5 en appliquant à cette dernière des impulsions de tension, tel que cela est illustré sur la figure 2.

A cet effet, ledit circuit électronique 29 peut comprendre un condensateur 26 qui se charge lorsque la pointe 5 est placée dans un champ électrique atmosphérique orageux, et d'un éclateur à gaz 27 monté en parallèle avec ledit condensateur 26 de telle sorte que son amorçage est provoqué par la montée de la tension aux bornes du condensateur 26.

Ledit éclateur à gaz 27 est de préférence monté en série avec le circuit primaire 28P d'un transformateur 28 si bien que lorsque ledit éclateur à gaz 27 devient passant, le condensateur 26 se décharge à travers le circuit primaire 28P pour créer, au secondaire 28S dudit transformateur auquel est relié la pointe 5, une impulsion de tension, laquelle provoque une excitation électronique de l'air au voisinage de ladite pointe 5 en renforçant ainsi le pouvoir de capture du dispositif 1.

Avantageusement, un tel circuit est oscillant et sollicite automatiquement la pointe 5 lorsque celle-ci se trouve dans un champ électrique orageux, en lui appliquant des trains d'impulsions de tension.

Selon une variante de réalisation particulièrement préférentielle illustrée sur la figure 3, et qui peut constituer une invention à part entière, le dispositif 1 comporte un moyen de test 30 destiné à vérifier le fonctionnement du moyen d'activation 20.

De préférence, ledit moyen de test 30 est pourvu d'un générateur de tension 31, distinct et indépendant du moyen d'activation 20, ledit générateur de tension 31 étant destiné à être raccordé électriquement au moyen de capture 3 afin de simuler les effets d'un champs électrique orageux. Préférentiellement, ledit générateur de tension 31 est apte à délivrer un train d'onde de forme triangulaire positive, de fréquence sensiblement égale à 10 kHz et d'amplitude voisine de 1500 V.

Plus précisément, en appliquant une différence de potentiel suffisante entre la pointe 5 et le boîtier 24 relié à la terre par le mât 6, il est possible d'observer la réponse du circuit électronique d'activation 29 formé par le condensateur 26, l'éclateur à gaz 27 et le transformateur 28 et ainsi de s'assurer que ledit circuit électronique 29 remplit convenablement sa fonction dans des conditions normales et prévisibles de sollicitation.

Bien entendu, un tel moyen de test 30 est employé uniquement par beau temps afin de vérifier que le moyen d'activation 20 est fonctionnel. Sa mise en oeuvre est particulièrement indiquée après le passage d'un orage susceptible d'avoir éprouvé le dispositif 1 et plus particulièrement le circuit électronique 29.

A cet effet, le moyen de capture 3 peut présenter une borne de test T ainsi qu'un conducteur de test 32 qui est destiné à relier ladite borne de test T au générateur de tension.

De préférence, tel que cela est représenté sur la figure 3, la borne de test T est reliée électriquement à la collerette 22, et plus généralement à la pointe 5, au niveau du boîtier 24 du PDA.

De préférence, une résistance d'isolement R1, par exemple d'une valeur de 10 MΩ (Mégaohms), est placée en série entre le moyen de test 30 et la collerette 22, de manière à ce que la mise en oeuvre dudit moyen de test 30 n'interfère pas avec le fonctionnement du circuit électronique 29.

Selon une variante de réalisation particulièrement préférentielle illustrée sur la figure 3, le conducteur de test 32 est formé au moins en partie par le premier conducteur de mesure 11.

Plus précisément, il est envisageable de raccorder électriquement l'extrémité 11E du fil premier conducteur de mesure 11 située au niveau de la partie supérieure du mât 6 tantôt à la borne de mesure haute A pour permettre, par temps orageux, la mesure de tension U_{AB}, tantôt à la borne de test T pour procéder, par beau temps, à la vérification du moyen d'activation 20.

A cet effet, le dispositif 1 est de préférence pourvu d'un moyen de routage 40, de type commutateur à relais 41 ou encore circuit de diodes, conçu pour relier le premier conducteur de mesure 11 alternativement à la borne de test T et à la borne de mesure haute A.

Selon la variante de réalisation illustrée sur la figure 3, le moyen de routage 40 peut également commander la commutation du premier et du second conducteur de mesure 11, 12 de manière à raccorder lesdits conducteurs de mesure alternativement au moyen d'évaluation du courant de foudre 10 et au moyen de test 30 (et plus précisément au générateur de tension 31).

Plus précisément, en pilotant simultanément le basculement de plusieurs commutateurs à relais 41 idoines, le moyen de routage 40 peut ainsi adopter alternativement deux configurations :
- une configuration de surveillance, qui correspond à celle représentée sur la figure 3, dans laquelle le moyen d'évaluation du courant de foudre 10, et plus précisément le voltmètre V1, est relié aux bornes de mesure haute et basse respectivement par le biais du premier et du second conducteur de mesure 11, 12, c'est-à-dire dans laquelle le circuit d'évaluation du courant de foudre (comprenant le moyen d'évaluation 10 et le tronçon d'épreuve [AB] auquel il est raccordé) est constitué et opérationnel,
- une configuration de test dans laquelle le moyen d'évaluation 10 est déconnecté desdits conducteurs de mesure au profit du moyen de test 30, et plus précisément du générateur de tension 31, qui est raccordé à la borne de test T et à la borne de mesure basse B respectivement par le biais du premier et du second conducteur de mesure 11, 12, c'est-à-dire dans laquelle le circuit de test (comprenant le générateur 31 raccordé au circuit électronique 29 et plus précisément à l'éclateur 23) est constitué et opérationnel tandis que le circuit d'évaluation du courant de foudre est en quelque sorte (provisoirement et réversiblement) « *démantelé* ».

En variante, il est envisageable que le second conducteur de mesure 12 soit relié en permanence au moyen d'évaluation du courant de foudre 10 et au moyen de test 30 d'une part, ainsi qu'à la borne de mesure basse d'autre part, tandis que seul le premier conducteur de mesure 11 est affecté alternativement à l'un ou l'autre desdits moyens.

Ainsi, le dispositif conforme à l'invention permet d'utiliser un seul conducteur, ou une seule paire de conducteurs, c'est-à-dire un seul canal, pour réaliser tantôt une fonction de test par beau temps, tantôt une fonction de surveillance du courant de foudre par temps orageux.

Un tel agencement, qui constitue une sorte de multiplexage, permet avantageusement d'une part de simplifier la conception du paratonnerre et d'en réduire le coût de fabrication, et d'autre part de combiner deux moyens complémentaires de surveillance et de diagnostic de fonctionnement du dispositif 1 conforme à l'invention, à savoir un moyen d'évaluation du courant de foudre et un moyen de test du moyen d'activation, ce qui contribue à fiabiliser le dispositif 1 et à simplifier sa maintenance.

Avantageusement, le moyen de test 30 conforme à l'invention est embarqué au niveau du dispositif 1, ce qui permet à l'utilisateur de s'affranchir de l'utilisation, parfois délicate, d'un coffret de test externe portable, laquelle nécessite qu'un opérateur saisisse à distance la pointe 5 à l'aide d'une perche conductrice reliée audit coffret afin d'appliquer à la pointe 5, au moyen de ladite perche un potentiel simulant les effets d'un champs électrique orageux.

Ainsi, grâce au moyen de test 30 intégré au dispositif 1 l'utilisateur peut, à tout moment (en dehors des périodes orageuses), obtenir des informations quant à l'état du moyen d'activation 20, et ce notamment sans avoir à se placer à proximité immédiate du moyen de capture 3, ce qui le dispense par exemple de devoir monter sur le toit de l'édifice 2 sur lequel ledit dispositif 1 est installé.

Par ailleurs, le dispositif 1 conforme à l'invention comprend de préférence une unité d'alimentation autonome 50, laquelle comporte par exemple une batterie 51 pouvant être rechargée par des panneaux photovoltaïques 52.

En outre, le dispositif 1 peut comprendre un module de gestion 60 apte à piloter notamment le fonctionnement du moyen d'évaluation du courant de foudre 10, du moyen de test 30 et du moyen de routage 40.

Le module de gestion 60 peut par exemple comprendre une unité de traitement programmée et/ou programmable de type carte électronique ou PC, ainsi qu'une unité de stockage destinée à conserver les données de programmation de l'unité de traitement et/ou les résultats des diverses mesures effectuées par le moyen d'évaluation du courant de foudre 10 ou le moyen de test 30.

Bien entendu, il est envisageable que le module de gestion 60 soit conçu pour collecter des informations en provenance notamment du moyen d'évaluation 10 (apparition d'un foudroiement, amplitude et forme d'onde du courant de foudre), du moyen de test 30 (réponse de l'électronique 29 en fonction de la sollicitation de la pointe 5) ou encore du moyen de routage 40 (état binaire des commutateurs), de manière à pouvoir établir un diagnostic de l'état général du dispositif 1 et, le cas échéant, émettre un signal d'alerte, par exemple visuel ou sonore, à l'attention de l'utilisateur.

Bien entendu, le module de gestion 60 peut intégrer une horloge afin d'horodater les événements tels que les foudroiements, ainsi qu'éventuellement un compteur enregistrant le nombre desdits foudroiements.

Le cas échéant, le module de gestion peut être programmé pour déclencher une alerte informant l'utilisateur qu'il est nécessaire de procéder à la maintenance du dispositif 1, par exemple après qu'un seuil prédéterminé de nombre de foudroiements et/ou d'intensité de courant de foudre a été franchi.

De préférence, le module de gestion 60 est associé à un module de communication 70 qui lui permet d'échanger des informations avec un utilisateur, ou à tout le moins qui lui permet de tenir des informations à disposition dudit utilisateur, voire qui autorise l'interconnexion en réseau de plusieurs dispositifs 1 tels que décrits.

En particulier, il est envisageable que le module de communication 70 comprenne un connecteur informatique standard, de type USB ou RS-232, permettant à l'utilisateur de se connecter au module de gestion 60 et, par exemple, de reprogrammer son unité de traitement ou d'accéder aux informations stockées dans l'unité de stockage.

De façon particulièrement préférentielle, le module de communication 70 est apte à transmettre des informations à distance, par exemple par radio fréquences, et notamment en utilisant un réseau de téléphonie mobile de type GSM.

En outre, le moyen d'évaluation du courant de foudre 10, le moyen d'activation 20, le moyen de test 30, le moyen de routage 40, l'unité d'alimentation 50, le module de gestion 60 et le module de communication 70 sont laissés à potentiel flottant.

En d'autres termes, ces éléments sont de préférence logés dans une base 80 non reliée à la terre et susceptible d'être elle-même portée au potentiel ambiant de la région de l'espace dans laquelle elle se trouve, et notamment au potentiel du mât 6 si elle se situe au niveau de celui-ci.

Un tel agencement permet avantageusement de ne pas soumettre les divers composants, notamment électroniques, constitutifs de ces différents éléments à des contraintes de tension très importantes, ce qui permet de modérer leur dimensionnement tout en garantissant leur longévité.

Bien entendu, il est envisageable de laisser à potentiel flottant l'un ou l'autre ou encore la totalité des éléments susmentionnés.

Un procédé de mesure d'un courant de foudre conforme à l'invention va maintenant être décrit, en référence préférentielle à un dispositif de protection contre la foudre tel que décrit précédemment.

Au sens de l'invention, un tel procédé de mesure d'un courant de foudre est de préférence appliqué dans une installation qui comprend au moins un moyen de capture de foudre 3 conçu pour recevoir une décharge directe de foudre, ainsi qu'au moins un conducteur d'écoulement 4 conçu pour écouler, depuis ledit moyen de capture 3 vers la terre, le courant électrique dit « *courant de foudre* » qui résulte de ladite décharge de foudre.

Plus précisément, le procédé de mesure d'un courant de foudre conforme à l'invention s'applique à un conducteur d'écoulement 4 qui est dépourvu de composant de charge susceptible de perturber significativement l'écoulement du courant de foudre.

Selon l'invention, le procédé de mesure d'un courant de foudre comporte une étape (a) de branchement au cours de laquelle on raccorde électriquement au conducteur d'écoulement 4 un moyen d'évaluation du courant de foudre 10 de sorte à pouvoir mesurer, lors d'une étape (b) de mesure, la tension qui apparaît entre les bornes A, B d'un tronçon d'épreuve [AB] dudit conducteur d'écoulement 4 lorsque ce dernier est parcouru par le courant de foudre.

En d'autres termes, le procédé de mesure conforme à l'invention consiste à venir raccorder un moyen d'évaluation du courant de foudre, de préférence un moyen de mesure de tension tel qu'un voltmètre V1, sur une portion choisie du conducteur d'écoulement 4 d'impédance, et plus particulièrement de résistance, connue, de sorte à pouvoir mesurer la tension qui apparaît aux bornes dudit tronçon d'épreuve et d'en déduire, grâce à la loi d'Ohm, les caractéristiques du courant de foudre, tel que l'amplitude et la forme d'onde.

De façon particulièrement avantageuse, un tel procédé de mesure peut être mis en oeuvre sur n'importe quel dispositif de protection contre la foudre existant dans la mesure où il suffit de venir se brancher sur le conducteur d'écoulement 4, éventuellement à l'extérieur de celui-ci, sans modifier et en particulier sans tronçonner ledit conducteur d'écoulement 4.

De préférence, le procédé de mesure conforme à l'invention est appliqué à un conducteur d'écoulement 4 sensiblement vertical de type mât 6 ou descente, qui est creux et qui présente dans sa partie supérieure 4S, et, de préférence, sensiblement à son sommet, une première borne de mesure A, dite « *borne de mesure haute* », et l'étape (a) de branchement comprend une sous-étape (a1) au cours de laquelle on relie électriquement ladite borne de mesure haute A au moyen d'évaluation du courant de foudre 10 à l'aide d'un premier conducteur de mesure 11, tel qu'un fil, qui présente une section isolée 11l que l'on fait courir à l'intérieur du conducteur d'écoulement 4.

Il est remarquable qu'un tel procédé présente une grande souplesse d'utilisation dans la mesure où il est possible de sélectionner librement une paire quelconque de bornes de mesure A, B, pourvu que l'impédance du tronçon d'épreuve [AB] soit déterminable, soit par calcul, soit par mesure (et suffisante pour fournir un signal exploitable en fonction des niveaux d'intensité des courant de foudre). En particulier, il est potentiellement envisageable de connecter le premier et le second conducteurs de mesure 11, 12 en tout point du mât 6 ou du conducteur de descente d'une installation de type paratonnerre.

Par ailleurs, la présente invention concerne également en tant que tel un procédé de commutation mis en oeuvre au sein d'un dispositif de protection contre la foudre qui comporte :
- au moins un moyen de capture de foudre 3 conçu pour recevoir une décharge directe de foudre,
- au moins un conducteur d'écoulement 4 conçu pour écouler, depuis ledit moyen de capture 3 vers la terre, le courant électrique, dit « *courant de foudre* », qui résulte de ladite décharge de foudre,
- un moyen d'évaluation du courant de foudre 10 conçu pour évaluer une ou plusieurs caractéristiques dudit courant de foudre, telles que son amplitude et sa forme d'onde
- un moyen d'activation 20 conçu pour augmenter, en valeur absolue, le potentiel électrique du moyen de capture 3,
- un moyen de test 30 pourvu d'un générateur de tension 31 distinct du moyen d'activation 20 et destiné à être raccordé électriquement au moyen de capture 3 afin de simuler les effets d'un champs électrique orageux pour vérifier le fonctionnement dudit moyen d'activation 20.

Selon l'invention, ledit procédé de commutation, qui peut par exemple être mis en oeuvre au cours d'un procédé de mesure d'un courant de foudre tel que décrit ci-dessus, comprend une étape (e1) de commutation en mode de surveillance au cours de laquelle on actionne un moyen de routage 40, de type commutateur à relais, afin de faire passer le dispositif 1 d'une configuration de test dans laquelle le moyen de test 30 est connecté d'une part au moyen de capture et d'autre part au conducteur d'écoulement 4 de manière à pouvoir générer une différence de potentiel entre ces éléments, à une configuration de surveillance dans laquelle le moyen d'évaluation du courant de foudre 10 est connecté au conducteur d'écoulement 4 au niveau d'une première bornes de mesure A et d'une seconde borne de mesure B distantes l'une de l'autre définissant un tronçon d'épreuve [AB], de sorte que le moyen d'évaluation 10 puisse mesurer la tension qui entre les bornes A, B dudit tronçon d'épreuve [AB] lorsque le conducteur d'écoulement 4 est parcouru par le courant de foudre.

Le procédé de commutation comprend également de préférence une étape (e2) de basculement en mode de test au cours de laquelle, à l'inverse de l'étape (e1), on fait passer le dispositif 1, de préférence par beau temps et après un événement orageux, de sa configuration de surveillance à sa configuration de test.

Ainsi, le dispositif 1 conforme à l'invention permet de réaliser de façon simple et efficace une surveillance des courants de foudre qui le traversent, et plus généralement des phénomènes de foudroiement qui l'affectent, et ce aussi bien sur de nouvelles installations que sur des installations déjà existantes.

En outre, il présente une structure simple et compacte qui contribue à réduire non seulement son coût de fabrication mais également son encombrement, ce qui limite la gêne esthétique qu'il est susceptible d'occasionner.

Enfin, le dispositif 1 conforme à l'invention est particulièrement fiable puisqu'il est apte à auto-diagnostiquer ses principales fonctions et à déceler d'éventuels dysfonctionnements de ses organes, et qu'il est susceptible d'interpeller l'utilisateur sur la nécessité d'opérer une maintenance préventive en fonction de l'historique des foudroiements qui l'ont sollicité.

## Revendications

1. Dispositif de protection (1) d'un édifice (2) contre la foudre, ledit dispositif (1) comprenant :
- au moins un moyen de capture de foudre (3) conçu pour recevoir une décharge directe de foudre,
- au moins un conducteur d'écoulement (4) conçu pour écouler, depuis ledit moyen de capture (3) vers la terre, le courant électrique, dit « courant de foudre », qui résulte de ladite décharge de foudre,
dans lequel ledit conducteur d'écoulement (4) étant dépourvu de composant de charge susceptible de perturber significativement l'écoulement du courant de foudre, ledit dispositif (1) comporte un moyen d'évaluation dudit courant de foudre (10) raccordé électriquement audit conducteur d'écoulement (4) de sorte à pouvoir mesurer la tension (UAB) qui apparaît entre les bornes (A, B) d'un tronçon ([AB]), dit« tronçon d'épreuve », dudit conducteur d'écoulement (4) présentant une continuité globale de sa structure aux points correspondants aux bornes (A, B), lorsque ce dernier est parcouru par ledit courant de foudre, **caractérisé en ce que** le moyen d'évaluation dudit courant de foudre (10) est laissé à potentiel flottant non relié à la terre.

2. Dispositif selon la revendication 1 **caractérisé en ce que** le conducteur d'écoulement (4) est monobloc.

3. Dispositif selon la revendication 1 ou 2 **caractérisé en ce que** le conducteur d'écoulement (4) s'étend sensiblement verticalement et présente, dans sa partie supérieure (4S), et, de préférence, sensiblement à son sommet, une première borne de mesure (A), dite « borne de mesure haute », destinée à être reliée électriquement au moyen d'évaluation du courant de foudre (10) au moyen d'un premier conducteur de mesure (11), tel qu'un fil.

4. Dispositif selon la revendication 3 **caractérisé en ce que**, le conducteur d'écoulement (4) étant creux, le premier conducteur de mesure (11) présente une section isolée (111) qui court à l'intérieur dudit conducteur d'écoulement (4), ledit premier conducteur de mesure (11) étant agencé pour être accessible à une altitude inférieure à celle de la borne de mesure haute (A), de préférence en débouchant sensiblement à la base du conducteur d'écoulement (4).

5. Dispositif selon l'une des revendications 3 ou 4 **caractérisé en ce que** le conducteur d'écoulement présente, dans sa partie inférieure (4B), et, de préférence, sensiblement à sa base, une seconde borne de mesure (B), dite «borne de mesure basse », destinée à être reliée électriquement au moyen d'évaluation du courant de foudre (10) au moyen d'un second conducteur de mesure (12), tel qu'un fil.

6. Dispositif selon l'une des revendications 3 à 5 **caractérisé en ce qu'**il constitue un paratonnerre dont le moyen de capture (3) est constitué par une pointe (5) et dont le conducteur d'écoulement (4) forme un mât (6) soutenant ladite pointe (5).

7. Dispositif selon l'une des revendications précédentes **caractérisé en ce que** le tronçon d'épreuve ([AB]) du conducteur d'écoulement (4) est agencé de telle sorte que sa résistance électrique (RAB) est inférieure ou égale à 65 mΩ.

8. Dispositif selon l'une des revendications précédentes **caractérisé en ce qu'**il comprend un moyen d'activation (20) conçu pour augmenter, en valeur absolue, le potentiel électrique du moyen de capture (3).

9. Dispositif selon la revendication 8 **caractérisé en ce qu'**il comporte un moyen de test (30) destiné à vérifier le fonctionnement du moyen d'activation (20), ledit moyen de test (30) étant pourvu d'un générateur de tension (31) distinct du moyen d'activation (20) et destiné à être raccordé électriquement au moyen de capture (3) afin de simuler les effets d'un champ électrique orageux.

10. Dispositif selon la revendication 9 **caractérisé en ce que** le moyen de capture présente une borne de test (T) ainsi qu'un conducteur de test (32) destiné à relier ladite borne de test (T) au générateur de tension (31).

11. Dispositif selon les revendications 3 ou 4 et la revendication 10 **caractérisé en ce que** le conducteur de test (32) est formé au moins en partie par le premier conducteur de mesure (11).

12. Dispositif selon la revendication 11 **caractérisé en ce qu'**il est pourvu d'un moyen de routage (40), de type commutateur à relais (41) ou circuit de diodes, conçu pour relier le premier conducteur de mesure (11) alternativement à la borne de test (T) et à la borne de mesure haute (A).

13. Dispositif selon l'une des revendications précédentes **caractérisé en ce qu'**il comprend une unité d'alimentation autonome (50) disposant par exemple d'une batterie (51) rechargée par des panneaux photovoltaïques (52).

14. Dispositif selon l'une ou l'autre des revendications précédentes **caractérisé en ce qu'**il comprend un module de gestion (60) apte à piloter le fonctionnement du moyen d'évaluation du courant de foudre (10), du moyen de test (30) et du moyen de routage (40).

15. Dispositif selon la revendication 14 **caractérisé en ce que** le module de gestion (60) est associé à un module de communication (70) lui permettant d'échanger des informations avec un utilisateur, ou à tout le moins de tenir des informations à disposition dudit utilisateur.

16. Dispositif selon la revendication 15 **caractérisé en ce que** le module de communication (70) est apte à transmettre des informations à distance, par exemple par radio-fréquences, notamment en utilisant un réseau de téléphonie mobile de type « GSM ».

17. Dispositif selon l'une ou l'autre des revendications précédentes **caractérisé en ce que** le moyen d'évaluation du courant de foudre (10), le moyen d'activation (20), le moyen de test (30), le moyen de routage (40), l'unité d'alimentation (50), le module de gestion (60) et le module de communication (70) sont laissés à potentiel flottant.

18. Procédé de mesure d'un courant de foudre dans le dispositif de protection (1) contre la foudre selon l'une quelconque des revendications 1 à 17, ledit procédé comportant une étape (a) de branchement au cours de laquelle on raccorde électriquement audit conducteur d'écoulement le moyen d'évaluation du courant de foudre (10) de sorte à pouvoir mesurer, lors d'une étape (b) de mesure, la tension qui apparaît entre les bornes (A, B) du tronçon ([AB]), dit« tronçon d'épreuve », dudit conducteur d'écoulement (4) lorsque ce dernier est parcouru par ledit courant de foudre.

19. Procédé de la revendication 18 selon l'une quelconque des revendications 12-17 dépendant de la revendication 10, comprend en outre une étape (e1) de commutation en mode de surveillance au cours de laquelle on actionne un moyen de routage (40), de type commutateur à relais, afin de faire passer le dispositif (1) d'une configuration de test dans laquelle le moyen de test (30) est connecté d'une part au moyen de capture et d'autre part au conducteur d'écoulement (4) de manière à pouvoir générer une différence de potentiel entre ces éléments, à une configuration de surveillance dans laquelle le moyen d'évaluation du courant de foudre (10) est connecté au conducteur d'écoulement (4) au niveau d'une première bornes de mesure (A) et d'une seconde borne de mesure (B) distantes l'une de l'autre définissant un tronçon d'épreuve [AB], de sorte que le moyen d'évaluation (10) puisse mesurer la tension qui entre les bornes (A, B) dudit tronçon d'épreuve [AB] lorsque le conducteur d'écoulement (4) est parcouru par le courant de foudre.

20. Le procédé selon la revendication 19, comprend également une étape (e2) de basculement en mode de test au cours de laquelle, à l'inverse de l'étape (e1) de commutation, on fait passer le dispositif (1), de préférence par beau temps et après un événement orageux, de sa configuration de surveillance à sa configuration de test.

## Patentansprüche

1. Vorrichtung zum Schutz (1) eines Gebäudes (2) gegen Blitzschlag, wobei die Vorrichtung (1) aufweist:
- mindestens ein Mittel zum Auffangen eines Blitzes (3), das ausgelegt ist, um eine direkte Blitzentladung aufzunehmen,
- mindestens einen Flussleiter (4), der dazu ausgelegt ist, um den elektrischen Strom, der "Blitzstrom" genannt wird, der aus der Blitzentladung resultiert, von dem Mittel zum Auffangen (3) zur Erde fließen zu lassen,
wobei der Flussleiter (4) keine Ladungskomponente aufweist, die das Fließen des Blitzstroms signifikant stören kann, die Vorrichtung (1) ein Mittel zum Bewerten des Blitzstroms (10) aufweist, das an den Flussleiter (4) derart elektrisch angeschlossen ist, um die Spannung (UAB) messen zu können, die zwischen den Anschlüssen (A, B) eines Abschnitts ([AB]) des Flussleiters (4), der "Prüfabschnitt" genannt wird, auftritt, der eine Gesamtkontinuität seiner Struktur an den Punkten, die den Anschlüssen (A, B) entsprechen, aufweist, wenn dieser Letztere von dem Blitzstrom durchflossen wird, **dadurch gekennzeichnet, dass** das Mittel zum Bewerten des Blitzstroms (10) potentialmäßig schwebend, nicht geerdet gehalten wird.

2. Vorrichtung nach Anspruch 1, **dadurch gekennzeichnet, dass** der Flussleiter (4) einteilig ist.

3. Vorrichtung nach Anspruch 1 oder 2, **dadurch gekennzeichnet, dass** sich der Flussleiter (4) im Wesentlichen vertikal erstreckt und in seinem oberen Teil (4S) und vorzugsweise an seiner Spitze einen ersten Messanschluss (A), der "oberer Messanschluss" genannt wird, aufweist, der dazu bestimmt ist, an das Mittel zum Bewerten des Blitzstroms (10) mit Hilfe eines ersten Messleiters (11), wie eines Drahtes, elektrisch angeschlossen zu werden.

4. Vorrichtung nach Anspruch 3, **dadurch gekennzeichnet, dass**, nachdem der Flussleiter (4) hohl ist, der erste Messleiter (11) einen isolierten Bereich (III) aufweist, der im Inneren des Flussleiters (4) verläuft, wobei der erste Messleiter (11) ausgebildet ist, um auf einer Höhe zugänglich zu sein, die niedriger als jene des oberen Messanschlusses (A) ist, indem er vorzugsweise im Wesentlichen an der Basis des Flussleiters (4) herauskommt.

5. Vorrichtung nach einem der Ansprüche 3 oder 4, **dadurch gekennzeichnet, dass** der Flussleiter in seinem unteren Teil (4B) und vorzugsweise im Wesentlichen an seiner Basis einen zweiten Messanschluss (B), der "unterer Messanschluss" genannt wird, aufweist, der dazu bestimmt ist, an das Mittel zum Bewerten des Blitzstroms (10) mit Hilfe eines zweiten Messleiters (12), wie eines Drahtes, elektrisch angeschlossen zu werden.

6. Vorrichtung nach einem der Ansprüche 3 bis 5, **dadurch gekennzeichnet, dass** sie einen Blitzableiter bildet, dessen Mittel zum Auffangen eines Blitzes (3) aus einer Spitze (5) gebildet ist und dessen Flussleiter (4) einen Mast (6) bildet, der die Spitze (5) stützt.

7. Vorrichtung nach einem der vorhergehenden Ansprüche, **dadurch gekennzeichnet, dass** der Testabschnitt ([AB]) des Flussleiters (4) derart ausgebildet ist, dass sein elektrischer Widerstand (RAB) kleiner als oder gleich 65 mΩ ist.

8. Vorrichtung nach einem der vorhergehenden Ansprüche, **dadurch gekennzeichnet, dass** sie ein Aktivierungsmittel (20) aufweist, das ausgelegt ist, um das elektrische Potential des Mittels zum Auffangen (3) in absoluten Werten zu erhöhen.

9. Vorrichtung nach Anspruch 8, **dadurch gekennzeichnet, dass** sie ein Prüfmittel (30) aufweist, das dazu bestimmt ist, das Funktionieren des Aktivierungsmittels (20) zu überprüfen, wobei das Prüfmittel (30) mit einem Spannungsgenerator (31) versehen ist, der von dem Aktivierungsmittel (20) verschieden ist und der dazu bestimmt ist, an das Mittel zum Auffangen (3) elektrisch angeschlossen zu werden, um die Wirkungen eines elektrischen Gewitterfelds zu simulieren.

10. Vorrichtung nach Anspruch 9, **dadurch gekennzeichnet, dass** das Mittel zum Auffangen einen Prüfanschluss (T) und einen Prüfleiter (32) aufweist, der dazu bestimmt ist, den Prüfanschluss (T) an den Spannungsgenerator (31) anzuschließen.

11. Vorrichtung nach den Ansprüchen 3 oder 4 und Anspruch 10, **dadurch gekennzeichnet, dass** der Prüfleiter (32) mindestens teilweise aus dem ersten Messleiter (11) gebildet ist.

12. Vorrichtung nach Anspruch 11, **dadurch gekennzeichnet, dass** sie mit einem Routing-Mittel (40) vom Typ des Relaisschalters (41) oder der Diodenschaltung ist, das ausgelegt ist, um den ersten Messleiter (11) alternativ an den Prüfanschluss (T) und an den oberen Messanschlusses (A) anzuschließen.

13. Vorrichtung nach einem der vorhergehenden Ansprüche, **dadurch gekennzeichnet, dass** sie eine eigenständige Stromversorgungseinheit (50) aufweist, die beispielsweise über eine Batterie (51) verfügt, die durch Photovoltaikmodule (52) aufgeladen wird.

14. Vorrichtung nach einem der vorhergehenden Ansprüche, **dadurch gekennzeichnet, dass** sie ein Verwaltungsmodul (60) aufweist, das geeignet ist, das Funktionieren des Mittels zum Bewerten des Blitzstroms (10), des Prüfmittels (30) und des Routing-Mittels (40) zu steuern.

15. Vorrichtung nach Anspruch 14, **dadurch gekennzeichnet, dass** das Verwaltungsmodul (60) mit einem Kommunikationsmodul (70) verbunden ist, das ihm ermöglicht, Informationen mit einem Benutzer auszutauschen oder zumindest die Informationen dem Benutzer bereitzuhalten.

16. Vorrichtung nach Anspruch 15, **dadurch gekennzeichnet, dass** das Kommunikationsmodul (70) geeignet ist, Informationen fernzuübertragen, beispielsweise durch Radiofunkfrequenzen, insbesondere durch Nutzung eines Mobiltelefonnetzes vom "GSM"-Typ.

17. Vorrichtung nach einem der vorhergehenden Ansprüche, **dadurch gekennzeichnet, dass** das Mittel zum Bewerten des Blitzstroms (10), das Aktivierungsmittel (20), das Prüfmittel (30), das Routing-Mittel (40), die Stromversorgungseinheit (50), das Verwaltungsmodul (60) und das Kommunikationsmodul (70) potentialmäßig schwebend gehalten werden.

18. Verfahren zum Messen eines Blitzstroms in der Vorrichtung zum Schutz (1) gegen Blitzschlag nach einem der Ansprüche 1 bis 17, wobei das Verfahren einen Schritt (a) des Anschließens aufweist, bei dem an den Flussleiter das Mittel zum Bewerten des Blitzstroms (10) derart elektrisch angeschlossen wird, um bei einem Schritt (b) des Messens die Spannung messen zu können, die zwischen den Anschlüssen (A, B) des Abschnitts ([AB]) des Flussleiters (4), der "Prüfabschnitt" genannt wird, auftritt, wenn dieser Letztere von dem Blitzstrom durchflossen wird.

19. Verfahren des Anspruchs 18 nach einem der Ansprüche 12 bis 17, die von dem Anspruch 10 abhängen, ferner umfassend einen Schritt (e1) des Kommutierens in den Überwachungsmodus, bei dem ein Routing-Mittel (40) vom Typ des Relaisschalters betätigt wird, um die Vorrichtung (1) von einer Prüfkonfiguration, in der das Prüfmittel (30) einerseits an das Mittel zum Auffangen und andererseits an den Flussleiter (4) derart angeschlossen wird, um eine Potentialdifferenz zwischen diesen Elemente zu erzeugen, in eine Überwachungskonfiguration übergehen zu lassen, in der das Mittel zum Bewerten des Blitzstroms (10) an den Flussleiter (4) an einem ersten Messanschluss (A) und einem zweiten Messleiter (B), die voneinander entfernt sind, die einen Prüfabschnitt [AB] definieren, derart angeschlossen wird, dass das Mittel zum Bewerten (10) die Spannung zwischen den Anschlüssen (A, B) des Prüfabschnitts [AB] messen kann, wenn der Flussleiter (4) von dem Blitzstrom durchflossen wird.

20. Das Verfahren nach Anspruch 19 weist ferner einen Schritt (e2) des Umschaltens in den Prüfmodus auf, bei dem umgekehrt zu dem Schritt (e1) des Kommutierens die Vorrichtung (1) vorzugsweise bei gutem Wetter und nach einem Gewitterereignis von seiner Überwachungskonfiguration in seine Prüfkonfiguration übergehen gelassen wird.

## Claims

1. A device (1) for protecting a building (2) against lightning, said device (1) comprising:
at least one lightning capture means (3) adapted to receive a direct lightning strike,
at least one flow conductor (4) designed for flow of electric current, referred to as "lightning current", which results from said lightning strike from said capture means (3) to earth,
wherein said flow conductor (4), is devoid of a charging component capable of significantly disturbing the flow of the lightning current, said device (1) comprises means for evaluating said lightning current (10) electrically connected to said conductor (4) so as to be able to measure the voltage (UAB) which appears between the terminals (A, B) of a section ([AB]), referred to as the "test section", of said flow conductor (4) having an overall continuity of its structure at the points corresponding to the terminals (A, B), when the latter is traversed by said lightning current, **characterized in that** the evaluation means of said lightning current (10) are left at a floating potential not connected to the earth.

2. Device according to claim 1 **characterized in that** the flow conductor (4) is of a one-piece construction.

3. Device according to claim 1 or 2 **characterized in that** the flow conductor (4) extends substantially vertically and has, in its upper portion (4S), and preferably substantially at its summit, a first measurement terminal (A), referred to as the "upper measurement terminal", adapted to be electrically connected to the evaluation means of the lightning current (10) by means of a first measurement conductor (11), such as a wire.

4. Device according to claim 3 **characterized in that**, the flow conductor (4) being hollow, the first measuring conductor (11) has an insulated section (111) running inside said flow conductor (4), said first measuring conductor (11) being arranged to be accessible at a height lower than that of the upper measuring terminal (A), preferably opening substantially at the base of the flow conductor (4).

5. Device according to one of claims 3 or 4 **characterized in that** the flow conductor has, in its lower portion (4B), and preferably substantially at its base, a second measuring terminal (B), referred to as the "lower measurement terminal", designed to be electrically connected to the evaluation means of the lightning current (10) by means of a second measuring conductor (12), such as a wire.

6. Device according to one of claims 3 to 5 **characterized in that** it constitutes a lightning rod the capture means (3) of which is constituted by a tip (5) and the flow conductor (4) of which forms a mast (6) supporting said tip (5).

7. Device according to one of the preceding claims **characterized in that** the test section ([AB]) of the flow conductor (4) is arranged such that its electrical resistance (RAB) is less than or equal to 65 mΩ.

8. Device according to one of the preceding claims **characterized in that** it comprises an activation means (20) designed to increase, in absolute value, the electric potential of the capture means (3).

9. Device according to claim 8 **characterized in that** it comprises a test means (30) for checking the operation of the activation means (20), said test means (30) being provided with a voltage generator (31) separate from the activation means (20) and adapted to be electrically connected to the capture means (3) to simulate the effects of a stormy weather electrical field.

10. Device according to claim 9 **characterized in that** the capture means has a test terminal (T) and a test lead (32) for connecting said test terminal (T) to the voltage generator (31).

11. Device according to claims 3 or 4 and claim 10 **characterized in that** the test lead (32) is formed at least in part by the first measuring conductor (11).

12. Device according to claim 11 **characterized in that** it is provided with a routing means (40), of the relay switch (41) or diode circuit type, adapted to connect the first measuring conductor (11) alternately to the test terminal (T) and to the upper measurement terminal (A).

13. Device according to one of the preceding claims **characterized in that** it comprises an autonomous power supply unit (50) having for example a battery (51) recharged by photovoltaic panels (52).

14. Device according to any one of the preceding claims **characterized in that** it comprises a management module (60) adapted to control the operation of the evaluation means of the lightning current (10), the test means (30) and the routing means (40).

15. Device according to claim 14 **characterized in that** the management module (60) is associated with a communication module (70) allowing it to exchange information with a user, or at least keep information available to said user.

16. Device according to claim 15 **characterized in that** the communication module (70) is adapted to transmit information remotely, for example by radiofrequency, notably using a GSM type mobile phone network.

17. Device according to one or other of the preceding claims, **characterized in that** the lightning current evaluation means (10), the activation means (20), the test means (30), the routing means (40), the power supply unit (50), the management module (60) and the communication module (70) are left at a floating electrical potential.

18. A method for measuring a lightning current in the lightning protection device (1) according to any one of claims 1 to 17, said method comprising a step (a) of connection during which the means for evaluation of the lightning current (10) are electrically connected to said flow conductor so as to be able, during a step (b) to measure the voltage which appears between the terminals (A, B) of the section ([ AB]),referred to as the "test section" of said flow conductor (4) when the latter is traversed by said lightning current.

19. The method of claim 18 according to any one of claims 12-17 when dependent on claim 10, furthermore comprising a step (e1) of switching to monitoring mode during which a routing means (40) of the relay switch type is actuated, in order to change the device (1) over from a test configuration in which the test means (30) is connected firstly to the capture means and secondly to the flow conductor (4) so as to be able to generate a potential difference between these elements, to a monitoring configuration in which the lightning current evaluation means (10) is connected to the flow conductor (4) at a first measurement terminal (A) and a second measurement terminal (B) spaced apart from one another defining a test section [AB], so that the evaluation means (10) can measure the voltage between the terminals (A, B) of the test section [AB] when the flow conductor (4) is traversed by the lightning current.

20. The method according to claim 19, also comprises a test mode switchover step (e2) in which, unlike the switching step (e1), the device (1) is switched, preferably in good weather and after a stormy weather event, from its monitoring configuration to its test configuration.
